# EUROPÄISCHE PATENTANMELDUNG

(11) **EP 1 382 510 A1**
(43) Veröffentlichungstag der Anmeldung: **21.01.2004**
(21) Anmeldenummer: 03010644.7
(22) Anmeldetag: 13.05.2003
(51) Int. Cl.: B62D 15/02, G01L 3/10, G01L 5/22

(54) **Vorrichtung zum Bestimmen eines Lenkwinkels**

(30) Priorität: 02.07.2002 DE 10230347
(71) Anmelder: Valeo Schalter und Sensoren GmbH, 74321 Bietigheim-Bissingen (DE)
(72) Erfinder: Jerems, Frank, Dr., 74369 Löchgau (DE); Ruff, Achim, 74354 Besigheim (DE); Fröhlich, Ekkehart, 74226 Nordheim (DE); Proft, Matthias, 74936 Siegelsbach (DE); Rachui, Dirk, 74321 Bietigheim-Bissingen (DE)
(74) Vertreter: Dreiss, Fuhlendorf, Steimle & Becker

(57) **Zusammenfassung**

Die Erfindung betrifft eine Vorrichtung zum Bestimmen eines Lenkwinkels und eines an einer Lenkwelle ausgeübten Drehmoments, wobei der Lenkwinkel optisch und das Drehmoment magnetisch bestimmt werden.

## Beschreibung

Die Erfindung betrifft eine Vorrichtung zum Bestimmen eines Lenkwinkels und eines an einer Lenkwelle ausgeübten Drehmoments.

Dabei wird der Lenkwinkel mit einer Codescheibe und einem die Codescheibe abtastenden optischen Sensor erfasst, wobei der optische Sensor ortsfest und die Codescheibe an der Lenkwelle fixiert ist, oder umgekehrt.

Mit der wachsenden Verbreitung von Regelsystemen zur Regelung der Fahrdynamik von Kraftfahrzeugen hat die Bedeutung von Lenkwinkelsensoren erheblich zugenommen. Derartige Sensoren haben die Aufgabe, ein Signal zu erzeugen, welches kennzeichnend für den Lenkwinkel bzw. die Lenkwinkeländerung eines Fahrzeugs ist. Hierzu ist in der Regel ein Codierelement, insbesondere eine Codescheibe starr mit der Lenkwelle verbunden. Der Codescheibe ist ein optischer Sensor zugeordnet, welcher gegenüber dem Chassis bzw. der Lenkwelle fixiert ist, und welcher in der Lage ist, den Code der Codescheibe zu lesen. Dabei sind an der Scheibe, z.B. in Form von Strichen oder Auskerbungen, Markierungen angebracht, welche abgetastet werden. Der optische Sensor kann aus einer Leuchtdiode (DE 199 36 245 A1), einem Lichtleiterelement und einer mehrere Lichtempfänger umfassenden Abtasteinheit bestehen. Das digitale Abtastprinzip zeichnet sich hierbei durch eine hohe Robustheit aus.

Mit einer derartigen Anordnung können der absolute Lenkwinkel, die Lenkrichtung, die Lenkgeschwindigkeit und die Lenkbeschleunigung relativ präzise ermittelt werden, jedoch sind diese Daten, z.B. für eine elektromechanische Lenkhilfe (EPAS), zu wenig. Darüber hinaus werden Die Richtung und die Größe des Lenkdrehmoments benötigt.

Die bekannten optischen Verfahren haben alle die Eigenschaft, dass die für die Drehmomentmessung notwendige Genauigkeit der Messung des Differenzwinkels zwischen Einund Ausgangswelle eines Torsionsstücks in einer Größenordnung kleiner als 0,05° liegen muss. Dies stellt die abbildende Optik vor Probleme, da die Messung der Lage von Strukturkanten aufgrund der direkten optischen Abbildung auf den Detektor deutlich besser sein muss, als der Abstand der Pixel der verwendeten optischen Sensorarrays. Die Messung des Drehmoments an den beiden Enden eines Torsionsstücks mittels optischer Sensoren ist z.B. aus der WO-A-99 09 385 bekannt. Die Abtastung eines Musters an einer Encoderscheibe mittels einer Optik ist z.B. aus der EP-A-0 777 851 bekannt.

Analoge optische Verfahren, wie oben erwähnt, sind für die Messung kleiner Verdrehwinkel in Lenksystemen zur Bestimmung des Drehmoments weniger geeignet, da sie weniger robust sind. Vor Allem bei der Verwendung des Sensors an einem Lenkgetriebe im Motorraum besteht durch die dort herrschenden höheren Temperaturen und durch den Anfall von Öl, Fett und Staub die Gefahr einer Störung eines solchen hoch auflösenden analogen optischen Systems.

Optische Sensoren im Motorraum sind dann geeignet, wenn sie digital und mit grober Auflösung arbeiten. Analoge optische Sensoren mit hoher Auflösung erscheinen aber weniger geeignet.

Magnetische Verfahren zur Drehmomentmessung arbeiten üblicherweise mit magnetischen Multipolrädern und magnetoresistiven Sensoren. Der Magnetfeldsensor erfasst die relative Lage der Magnetpole (DE 198 28 513). Dadurch wird der geringe mechanische Verdrehwinkel in eine große elektrische Signaländerung transformiert und eine hohe Messgenauigkeit erzielt.

Der Erfindung liegt daher die Aufgabe zugrunde, eine Vorrichtung der eingangs genannten Art dahingehend weiterzubilden, dass die für die EPAS und EPS notwendigen Lenkinformationen aus einem einzigen Gerät kostengünstig und robust ermittelt werden können.

Diese Aufgabe wird mit einer Vorrichtung der eingangs genannten Art erfindungsgemäß dadurch gelöst, dass in die Lenkwelle ein Torsionsstück eingesetzt ist, dass ein Magnetring vorgesehen ist und dass dem Magnetring ein magnetoresistiver Sensor benachbart ist, wobei der Magnetring dem einen Ende des Torsionsstücks und der magnetoresistive Sensor dem anderen Ende des Torsionsstücks zugeordnet ist.

Die oben genannte Aufgabe wird außerdem mit einer Vorrichtung der eingangs genannten Art gelöst, bei der in die Lenkwelle ein Torsionsstück eingesetzt ist, wobei ein erster und ein zweiter Magnetring vorgesehen sind und den Magnetringen wenigstens ein magnetoresistiver Sensor benachbart ist, wobei der erste Magnetring dem einen Ende des Torsionsstücks und der zweite Magnetring dem anderen Ende des Torsionsstücks zugeordnet ist und der wenigstens eine magnetoresistive Sensor ortsfest ist.

Mit den Vorrichtungen gemäß Anspruch 1 und gemäß Anspruch 2 kann der Absolutwinkel einer Lenkwelle und gleichzeitig das auf die Lenkwelle ausgeübte Drehmoment gemessen werden. Der Lenkwinkel wird dabei mit einem optischen System, das Drehmoment mit einem magnetischen System gemessen. Aus den ermittelten Daten lassen sich zusätzlich die Lenkgeschwindigkeit und die Lenkbeschleunigung ableiten. Diese Signale können analog oder digital (CAN oder andere Bussysteme oder als pulsweitenmoduliertes Signal) einem oder mehreren Steuergeräten in einem Kraftfahrzeug zur Verfügung gestellt werden. Der Vorteil der Erfindung besteht darin, dass nicht nur die elektronische Stabilitätskontrolle (ESP) Informationen über den absoluten Lenkwinkel erhält, sondern dass auch die elektromechanische Lenkhilfe (EPAS) Informationen über das auf die Lenkwelle ausgeübte Drehmoment, nämlich der Kraftaufwand des Fahrers, speziell bei Parkmanövern, und über die Lenkgeschwindigkeit bzw. Lenkbeschleunigung erhält. Es werden also mehr Informationen bereitgestellt, als lediglich der Lenkwinkel.

Die Messung des Drehmoments am Torsionsstück kann einerseits dadurch erfolgen, dass zwei Magnetringe verwendet werden, die mit den Enden des Torsionsstück verbunden sind, und die von wenigstens einem magnetoresistiven Sensor abgetastet werden, welcher ortsfest ist. Andererseits kann die Messung des Drehmoments auch dadurch erfolgen, dass das eine Ende des Torsionsstücks mit einem Magnetring und das andere Ende des Torsionsstücks mit einem magnetoresistiven Sensor verbunden ist. Um die Signale aus dem sich drehenden System herauszuführen, ist eine Wickelfeder für den Sensor erforderlich.

Bei einer Weiterbildung ist vorgesehen, dass die Codescheibe, der oder die Magnetringe und die Sensoren in einem gemeinsamen Gehäuse angeordnet sind. Die mechanische Integration erlaubt die Auswertung der Sensorsignale mit einer Elektronikeinheit und die Realisierung einer gemeinsamen digitalen Schnittstelle mit anderen Steuergeräten. Die Integration erspart zudem mechanische Komponenten, wie Gehäuse, Steckverbindungen usw. und führt insgesamt zu einer Ersparnis bei der Herstellung der Vorrichtung. Mit Vorzug ist der Magnetring als Multipolring ausgebildet. Dabei entspricht der Winkelbereich des Polpaares in etwa dem zu erwartenden maximalen Verdrehwinkel des Torsionsstücks. Mittels einer geeigneten Schaltung, z.B. einer Wheatstone' schen Brückenschaltung, kann eine hohe Auflösung erzielt werden.

Eine weitere Vergrößerung der Auflösung wird dadurch erreicht, dass der Magnetring und/oder der magnetoresistive Sensor mittels einer die Lenkwelle umgebenden Hülse am Ende des Torsionsstückes befestigt ist. Dies hat den Vorteil, dass relativ lange Torsionsstücke verwendet werden können, so dass der Differenzwinkel zwischen den Enden des Torsionsstücks und somit das Sensorsignal relativ groß ist. Außerdem können die Magnetringe bzw. der Magnetring und der magnetoresistive Sensor in unmittelbarer Nachbarschaft innerhalb des Gehäuses untergebracht werden, wobei das Torsionsstück größer dimensioniert sein kann als die axiale Ausdehnung des Gehäuses. Die Hülsen umgeben dabei die Lenkwelle bzw. das Torsionsstück mit geringem Abstand. Vorteilhafterweise sind Gleitelemente zwischen der Hülse und der Lenkwelle bzw. dem Torsionsstück vorgesehen.

Bei einer Ausführungsform ist vorgesehen, dass die beiden Magnetringe axial nebeneinander oder radial nebeneinander angeordnet sind. Bei der axial nebeneinander ausgerichteten Anordnung besitzen sie den gleichen radialen Abstand zur Achse der Lenkwelle und werden z.B. von einem zwei magnetoresistive Sensoren enthaltenden Bauelement übergriffen. Mittels dieser beiden magnetoresistiven Sensoren kann der Differenzwinkel der beiden Magnetringe ermittelt und daraus das Drehmoment errechnet werden.

Bei einer Variante ist vorgesehen, dass zwischen den beiden Magnetringen, d. h. mit in etwa gleichem radialen Abstand, ein einziger magnetoresistiver Sensor vorgesehen ist, der ebenfalls die Veränderung des Magnetfelds, welche durch die Winkeldifferenz der beiden Magnetringe hervorgerufen wird, erfasst.

Bei der nächsten Variante, bei der die Magnetringe radial nebeneinander angeordnet sind, d.h. bei welcher der eine Magnetring vom anderen Magnetring übergriffen ist, können ebenfalls ein oder zwei Sensoren vorgesehen sein. Bei der Verwendung eines Sensors, ist dieser im Wesentlichen zwischen den beiden geschachtelten Magnetringen angeordnet, wohingegen bei der Verwendung von zwei magnetoresistiven Sensoren diese axial neben den beiden Magnetringen vorgesehen sind.

Bei diesen Varianten sind der eine Sensor bzw. die beiden Sensoren ortsfest mit dem Gehäuse der Vorrichtung gekoppelt. Zusätzlich lässt sich bei den Ausführungen mit zwei Magnetringen ein Magnetring zur Erhöhung der Auflösung und der Genauigkeit der Lenkwinkelinformation nutzen.

Eine noch weitergehende Integration der einzelnen Bauelemente wird dadurch erzielt, dass im Gehäuse eine Elektronikeinheit vorgesehen ist, mit welcher die Daten der Sensoren verarbeitbar sind. Diese Daten können dann unmittelbar an die anzeigenden oder weiterverarbeitenden Geräte übermittelt werden. Von Vorteil ist also, dass im herkömmlichen Gehäuse des Lenkwinkelsensors nicht nur der absolute Lenkwinkel, die Lenkgeschwindigkeit und die Lenkbeschleunigung sondern auch das Drehmoment ermittelt werden. Diese Daten sind z.B. erforderlich für elektromechanische Lenkhilfen.

Weitere Vorteile, Merkmale und Einzelheiten der Erfindung ergeben sich aus der nachfolgenden Beschreibung, in der unter Bezugnahme auf die Zeichnung besonders bevorzugte Ausführungsbeispiele im Einzelnen beschrieben sind. Dabei können die in der Zeichnung dargestellten sowie in den Ansprüchen und in der Beschreibung erwähnten Merkmale jeweils einzeln für sich oder in beliebiger Kombination erfindungswesentlich sein.

In der Zeichnung zeigen:
- Figur 1: einen Längsschnitt durch eine schematische Darstellung eines kombinierten Drehmoment/Lenkwinkelsensorgehäuses; und
- Figur 2: eine perspektivische Ansicht eines kombinierten Drehmoment/Lenkwinkelsensorgehäuses mit einem Magnetring, teilweise aufgeschnitten.

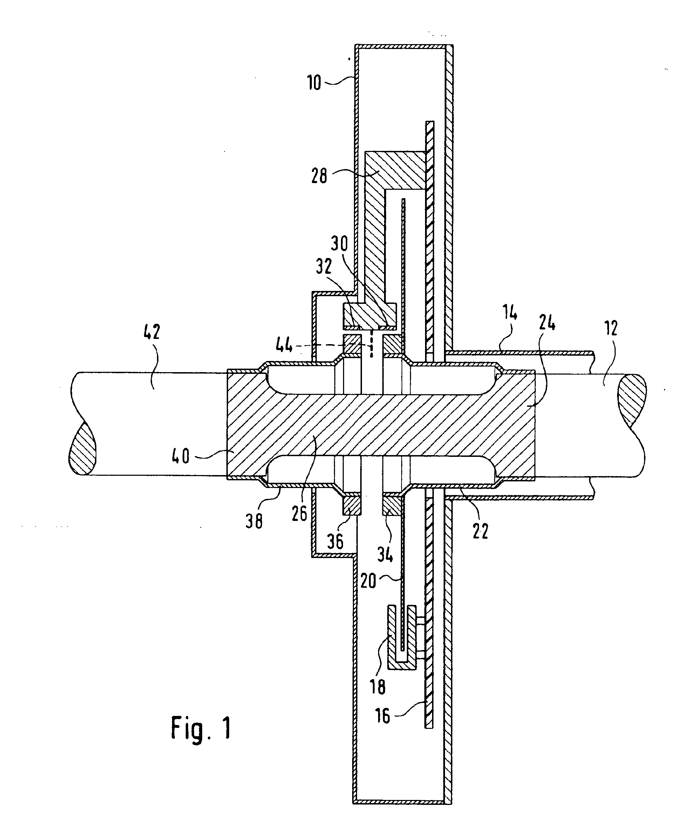

Figur 1 zeigt ein insgesamt mit 10 bezeichnetes Gehäuse, welches im Bereich eines (nicht dargestellten) Lenkrades eines Kraftfahrzeugs an einer Lenkwelle 12 befestigt ist. Das Gehäuse 10 und die Lenkwelle 12 sind lediglich schematisch dargestellt. Das Gehäuse 10 ist an einem Mantelrohr 14, welches die Lenkwelle 12 aufnimmt, befestigt und somit ortsfest und nicht drehbar angeordnet. Innerhalb des Gehäuses 10 befindet sich eine Platine oder Leiterplatte 16, auf welcher zum einen die elektronischen Bausteine angeordnet sind, zum anderen ein optischer Sensor 18 befestigt ist, welcher eine Codescheibe 20 abtastet. Diese Codescheibe 20 ist über eine erste Hülse 22 mit der Lenkwelle 12, insbesondere mit einem ersten Ende 24 eines Torsionsstücks 26, verbunden, so dass die Codescheibe 20 die Drehbewegungen der Lenkwelle 12 durchführt. Mit dem optischen Sensor 18 kann also der Lenkwinkel der Lenkwelle 12 ermittelt werden.

An der Leiterplatte 16 ist außerdem ein Haltearm 28 befestigt, welcher zwei magnetoresistive Sensoren 30 und 32 trägt. Diese magnetoresistiven Sensoren 30 und 32 sind in Form von Chips ausgebildet und sind zwei Magnetringen 34 und 36 benachbart. Diese Magnetringe 34 und 36 sind ihrerseits mit der Lenkwelle 12 verbunden, wobei der Magnetring 34 über die erste Hülse 22 mit dem ersten Ende 24 des Torsionsstücks 26 und der zweite Magnetring 36 über eine zweite Hülse 38 mit einem zweiten Ende 40 des Torsionsstücks 26 gekoppelt ist. Wird am freien Ende 42 der Lenkwelle 12 ein Drehmoment aufgebracht, dann entsteht aufgrund des Torsionsstücks 26 zwischen dem ersten Ende 24 und dem zweiten Ende 40 eine Winkeldifferenz, die über die Hülsen 22 und 38 direkt auf die Magnetringe 34 und 36 übertragen wird. Die Winkelpositionen der beiden Magnetringe 34 und 36 werden von den beiden magnetoresistiven Sensoren 30 und 32 erfasst und aus der Winkeldifferenz wird ein elektrisches Signal gebildet.

Bei einer Variante kann vorgesehen sein, dass anstelle von zwei magnetoresistiven Sensoren 30 und 32 ein einziger magnetoresistiver Sensor 44 verwendet wird, der, wie mit strichpunktierter Linie angedeutet, ebenfalls am Haltearm 28 befestigt ist, und zwischen den beiden Magnetringen 34 und 36 liegt. Mit diesem einzigen magnetoresistiven Sensor 44 kann ebenfalls die Winkeldifferenz zwischen den beiden Magnetringen 34 und 36 ermittelt werden.

Eine weitere (nicht dargestellte Variante) sieht vor, dass die beiden Magnetringe ineinander geschachtelt sind, d.h., dass der eine Magnetring radial über dem anderen Magnetring liegt und dass zwischen den beiden Magnetringen ein einziger magnetoresistiver Sensor angeordnet ist. Auch hier kann mit diesem einen magnetoresistiven Sensor die Winkeldifferenz der beiden Magnetringe erfasst werden.

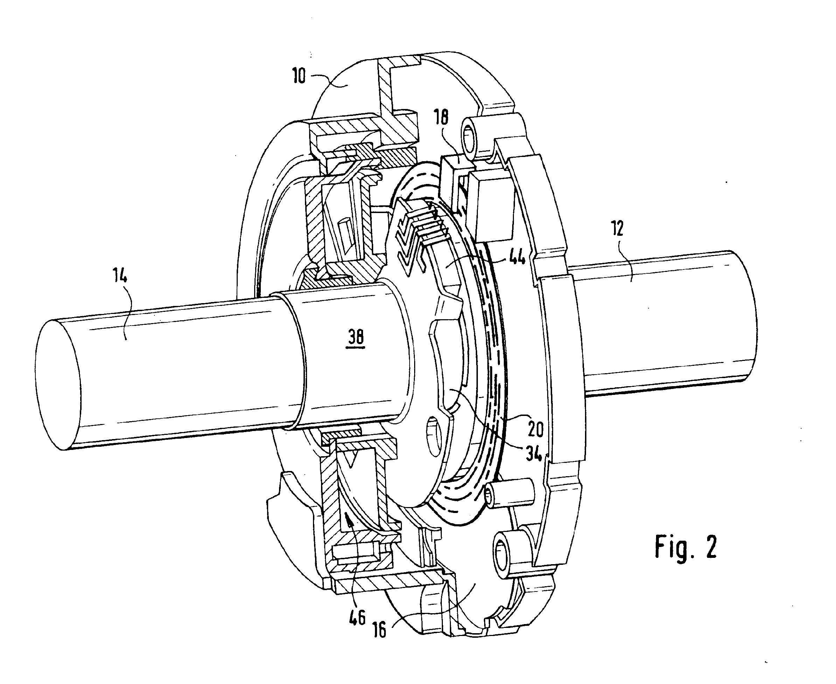

Die Figur 2 zeigt eine perspektivische Darstellung einer bevorzugten Ausführungsform der erfindungsgemäßen Vorrichtung, wobei das Gehäuse 10 teilweise aufgeschnitten ist. Im Gehäuse 10 sind die ortsfeste Leiterplatte 16, die mit der Lenkwelle 12 verbundene Codescheibe 20, der optische Sensor 18, der direkt auf der Leiterplatte 16 befestigt ist, und ein mehrpoliger Magnetring 34 erkennbar. Dieser mehrpolige Magnetring 34 ist über die nicht sichtbare erste Hülse 22 zusammen mit der Codescheibe 20 am ersten Ende 24 des Torsionsstücks 26 befestigt. Dem Magnetring 34 ist ein magnetoresistiver Sensor 44 in axialer Richtung benachbart, wobei dieser Sensor 44 über die zweite Hülse 38 am zweiten Ende des Torsionsstücks befestigt ist. Die elektrischen Signale des Sensors 44 werden über eine nicht dargestellte Wickelfeder, die im Aufnahmeraum 46 untergebracht ist, der Leiterplatte 16 zugeführt.

Bei dieser Ausführungsform wird lediglich ein einziger Magnetring 34 und ein magnetoresistiver Sensor 44 benötigt, wobei zur Signalübertragung jedoch die Wickelfeder erforderlich ist.

Von Vorteil ist, dass innerhalb des Gehäuses 10 alle Bauteile zur Erfassung des Lenkwinkels, der Lenkwinkelgeschwindigkeit, der Lenkwinkelbeschleunigung und des Drehmoments untergebracht sind, und dass die dort ermittelten Daten direkt innerhalb des Gehäuses verarbeitet werden, so dass sie über bereits vorhandene Signalübertragungswege den anzeigenden oder weiterverarbeitenden Komponenten zugeführt werden können.

## Patentansprüche

1. Vorrichtung zum Bestimmen eines Lenkwinkels und eines an einer Lenkwelle (12) ausgeübten Drehmoments, mit einer Codescheibe (20) und einem die Codescheibe (20) abtastenden optischen Sensor (18), wobei der optische Sensor (18) ortsfest und die Codescheibe (20) an der Lenkwelle (12) fixiert ist, oder umgekehrt, **dadurch gekennzeichnet, dass** in die Lenkwelle (12) ein Torsionsstück (26) eingesetzt ist, dass ein Magnetring (34) vorgesehen ist und dass dem Magnetring (34) ein magnetoresistiver Sensor (44) benachbart ist, wobei der Magnetring (34) dem einen Ende (24) des Torsionsstücks (26) und der magnetoresistive Sensor (44) dem anderen Ende (40) des Torsionsstücks (26) zugeordnet ist.

2. Vorrichtung zum Bestimmen eines Lenkwinkels und eines an einer Lenkwelle (12) ausgeübten Drehmoments, mit einer Codescheibe (20) und einem die Codescheibe (20) abtastenden optischen Sensor (18), wobei der optische Sensor (18) ortsfest und die Codescheibe (20) an der Lenkwelle (12) fixiert ist, oder umgekehrt, **dadurch gekennzeichnet, dass** in die Lenkwelle (12) ein Torsionsstück (26) eingefügt ist, dass ein erster und ein zweiter Magnetring (34 und 36) vorgesehen sind und dass den Magnetringen (34 und 36) wenigstens ein magnetoresistiver Sensor (30, 32, 44) benachbart ist, wobei der erste Magnetring (34) dem einen Ende (24) des Torsionsstücks (26) und der zweite Magnetring (36) dem anderen Ende (40) des Torsionsstücks (26) zugeordnet ist und der wenigstens eine magnetoresistive Sensor (30, 32, 44) ortsfest ist.

3. Vorrichtung nach einem der vorhergehenden Ansprüche, **dadurch gekennzeichnet, dass** die Codescheibe (20), der oder die Magnetringe (24, 36) und die Sensoren (30, 32, 44) in einem gemeinsamen Gehäuse (10) angeordnet sind.

4. Vorrichtung nach einem der vorhergehenden Ansprüche, **dadurch gekennzeichnet, dass** der Magnetring (34, 36) als Multipolring ausgebildet ist.

5. Vorrichtung nach einem der vorhergehenden Ansprüche, **dadurch gekennzeichnet, dass** der Magnetring (34, 36) und/oder der magnetoresistive Sensor (44) mittels einer die Lenkwelle (12) umgebenden Hülse (22, 38) am Ende (24, 40) des Torsionsstücks (26) befestigt ist.

6. Vorrichtung nach einem der Ansprüche 2 bis 5, **dadurch gekennzeichnet, dass** die beiden Magnetringe (34, 36) axial nebeneinander oder radial nebeneinander angeordnet sind.

7. Vorrichtung nach Anspruch 6, **dadurch gekennzeichnet, dass** zwischen den beiden Magnetringen (34, 36) ein magnetoresistiver Sensor (44) angeordnet ist.

8. Vorrichtung nach einem der Ansprüche 2 bis 5, **dadurch gekennzeichnet, dass** den beiden Magnetringen (34, 36) zwei magnetoresistive Sensoren (30, 32) benachbart sind.

9. Vorrichtung nach einem der Ansprüche 3 bis 8, **dadurch gekennzeichnet, dass** im Gehäuse (10) eine Elektronikeinheit vorgesehen ist, mit welcher die Daten der Sensoren (30, 32, 44) verarbeitbar sind.
